# EUROPEAN PATENT APPLICATION

(11) **EP 4 647 860 A1**
(43) Date of publication of application: **12.11.2025**
(21) Application number: 25170952.3
(22) Date of filing: 16.04.2025
(51) Int. Cl.: G05B 23/02

(54) **ELECTRONIC SYSTEM FOR PREDICTIVE MAINTENANCE BASED ON DATA FUSION**

(30) Priority: 09.05.2024 CN 202410568285
(71) Applicant: Delmind Inc., Taoyuan City 330477 (TW)
(72) Inventor: CHI, Nai-Chia, Taoyuan City (TW); LO, Shao-Ting, Taoyuan City (TW); PAN, Shih-Jie, Taoyuan City (TW)
(74) Representative: 2K Patentanwälte Blasberg Kewitz & Reichel

(57) **Abstract**

An electronic system includes a first vibration sensing device, a second vibration sensing device, a database, and a processor. The first vibration sensing device is disposed on a surface of first equipment, and detects a first time-domain vibration signal when the first equipment is operating. The second vibration sensing device is disposed on a surface of second equipment, and detects a second time-domain vibration signal when the second equipment is operating. The database stores process parameters associated with at least one of the first equipment and the second equipment. The processor receives the first time-domain vibration signal, the second time-domain vibration signal, and the process parameters, and trains a predictive model based on the first time-domain vibration signal, the second time-domain vibration signal, and the process parameters. The predictive model diagnoses a health status of the first equipment.

## Description

### CROSS REFERENCE TO RELATED APPLICATIONS

This Application claims priority of China Patent Application No. 202410568285.2, filed on May 9, 2024, the entirety of which is incorporated by reference herein.

### BACKGROUND OF THE INVENTION

### Field of the Invention

The present invention relates to an electronic system, and, in particular, to an electronic system for predictive maintenance based on data fusion.

### Description of the Related Art

In the petrochemical industry, processes are mostly continuous; therefore, unexpected downtime of equipment will have a huge impact on the production line, making predictive maintenance for key equipment particularly important. Conventional predictive maintenance methods typically rely on monitoring of signals or control parameters from a single piece of equipment, and lacks reference to production line schedules, production and sales plans, or the potential for transmission of structural vibration, resulting in misjudgments or failures in predictive maintenance system.

### BRIEF SUMMARY OF THE INVENTION

An embodiment of the present invention provides an electronic system. The electronic system includes a first vibration sensing device, a second vibration sensing device, a database, and a processor. The first vibration sensing device is disposed on the surface of a first equipment, and detects a first time-domain vibration signal when the first equipment is operating. The second vibration sensing device is disposed on the surface of second equipment, and detects a second time-domain vibration signal when the second equipment is operating. The second equipment is associated with the first equipment during a production process. The database stores process parameters associated with at least one of the first equipment and the second equipment. The processor receives the first time-domain vibration signal, the second time-domain vibration signal, and the process parameters, and trains a predictive model based on the first time-domain vibration signal, the second time-domain vibration signal, and the process parameters. The predictive model diagnoses the health status of the first equipment.

The electronic system further includes a historical database. The historical database stores historical feature data. The processor trains the predictive model based on the first time-domain vibration signal, the second time-domain vibration signal, the process parameters, and the historical feature data, and outputs a prediction result for the health status of the first equipment through the predictive model.

According to the electronic system described above, the processor performs feature extraction on the first time-domain vibration signal and the second time-domain vibration signal.

According to the electronic system described above, the processor performs spectrum analysis on the first time-domain vibration signal and the second time-domain vibration signal.

According to the electronic system described above, the processor performs data fusion on the first time-domain vibration signal, the second time-domain vibration signal, and the process parameters.

According to the electronic system described above, the processor performs data source time-series analysis on the first time-domain vibration signal, the second time-domain vibration signal, and the process parameters.

According to the electronic system described above, the data source time-series analysis includes determining a time difference between a time point when the first time-domain vibration signal is received and a time point at which a fault is predicted to occur based on the first time-domain vibration signal, the second time-domain vibration signal, and the process parameters.

According to the electronic system described above, the processor performs vibration signal analysis on the first time-domain vibration signal and the second time-domain vibration signal.

According to the electronic system described above, the vibration signal analysis includes analyzing the first time-domain vibration signal according to a structural vibration transmission characteristic of the first equipment and analyzing the second time-domain vibration signal according to a structural vibration transmission characteristic of the second equipment to generate a vibration transmission characteristic analysis result.

According to the electronic system described above, the processor determines a mathematical correlation among the first time-domain vibration signal, the second-time domain vibration signal, the process parameters, the historical feature data, the time difference, and the vibration transmission characteristic analysis result to complete training of the predictive model.

The electronic system further includes a user interface. The user interface incudes a data selection interface, a data retrieval setting interface, and a historical data display interface. The data selection interface is used to select the historical feature data. The data retrieval setting interface is used to set a sampling interval. The historical data display interface, on which the processor displays historical data content based on the selected historical data and the set sampling interval.

According to the electronic system described above, the process parameters are selected from one or more of a temperature, a pressure, and a flow rate.

According to the electronic system described above, the process parameters are selected from one or more of an ethylene flow rate, a vinyl acetate flow rate, a plasticizer flow rate, and a catalyst flow rate.

According to the electronic system described above, the process parameters include a pump flow setting; wherein the pump flow setting corresponds to the raw material flow rate of different products in the production process.

According to the electronic system described above, the first equipment is a high-pressure reactor, and the second equipment is a compressor.

According to the electronic system described above, the first vibration sensing device is disposed at the bearing connection of the high-pressure reactor.

According to the electronic system described above, the second vibration sensing device is disposed on the horizontal radial surface of the compressor.

According to the electronic system described above, the first vibration sensing device includes a first transmission interface, a control unit, a sensor, and a first register. The first transmission interface receives a control instruction from the processor. The control unit outputs an enable signal according to the control instruction. The sensor receives the enable signal and start detecting the first time-domain vibration signal when the first equipment is operating. The first register stores the first time-domain vibration signal, and sends the first time-domain vibration signal to the first transmission interface, so that the first time-domain vibration signal is output to the processor.

According to the electronic system described above, the processor is disposed in a control device. The control device is electrically connected to the first vibration sensing device, the second vibration sensing device, and the database.

An embodiment of the present invention also provides an electronic system. The electronic system includes a first vibration sensing device, a second vibration sensing device, and a processor. The first vibration sensing device is disposed on the surface of a first equipment, and detects a first time-domain vibration signal when the first equipment is operating. The second vibration sensing device is disposed on the surface of second equipment, and detects a second time-domain vibration signal when the second equipment is operating. The second equipment is associated with the first equipment during a production process. The processor receives the first time-domain vibration signal and the second time-domain vibration signal, and trains a predictive model based on the first time-domain vibration signal and the second time-domain vibration signal. The predictive model diagnoses the health status of the first equipment.

### BRIEF DESCRIPTION OF THE DRAWINGS

The present invention can be more fully understood by reading the subsequent detailed description and examples with references made to the accompanying drawings, wherein:
FIG. 1 shows a schematic diagram of an electronic system 100 in accordance with some embodiments of the present invention;
FIG. 2 shows a schematic diagram of a first vibration sensing device 102 being disposed on the surface of first equipment 200 in accordance with some embodiments of the present invention;
FIG. 3A shows a schematic diagram of second equipment 300 in accordance with some embodiments of the present invention;
FIG. 3B shows a schematic diagram of a second vibration sensing device 160 being disposed on the surface of the second equipment 300 in accordance with some embodiments of the present invention;
FIG. 4 shows a flow chart of a data fusion-based predictive maintenance method in accordance with some embodiments of the present invention;
FIG. 5 shows a schematic diagram of a method of data fusion illustrated in FIG. 4 in accordance with some embodiments of the present invention;
FIG. 6 shows a comparison diagram of vibration signals between a predictive alarm system 600 established with reference to only a vibration data source and a predictive alarm system 606 established with reference to multiple data sources in accordance with some embodiments of the present invention; and
FIG. 7 shows a schematic diagram of a user interface 700 in accordance with some embodiments of the present invention.

### DETAILED DESCRIPTION OF THE INVENTION

In order to make the above purposes, features, and advantages of some embodiments of the present invention more comprehensible, the following is a detailed description in conjunction with the accompanying drawing.

Certain terms are used throughout the description and following claims to refer to particular components. As one skilled in the art will understand, electronic equipment manufacturers may refer to a component by different names. This document does not intend to distinguish between components that differ in name but not function. It is understood that the words "comprise", "have" and "include" are used in an open-ended fashion, and thus should be interpreted to mean "include, but not limited to...". Thus, when the terms "comprise", "have" or "include" used in the present invention are used to indicate the existence of specific technical features, values, method steps, operations, units or components. However, it does not exclude the possibility that more technical features, numerical values, method steps, work processes, units, components, or any combination of the above can be added.

The directional terms used throughout the description and following claims, such as: "on", "up", "above", "down", "below", "front", "rear", "back", "left", "right", etc., are only directions referring to the drawings. Therefore, the directional terms are used for explaining and not used for limiting the present invention. Regarding the drawings, the drawings show the general characteristics of methods, structures, or materials used in specific embodiments. However, the drawings should not be construed as defining or limiting the scope or properties encompassed by these embodiments. For example, for clarity, the relative size, thickness, and position of each layer, each area, or each structure may be reduced or enlarged.

When the corresponding component such as layer or area is referred to as being "on another component", it may be directly on this other component, or other components may exist between them. On the other hand, when the component is referred to as being "directly on another component (or the variant thereof)", there is no component between them. Furthermore, when the corresponding component is referred to as being "on another component", the corresponding component and the other component have a disposition relationship along a top-view/vertical direction, the corresponding component may be below or above the other component, and the disposition relationship along the top-view/vertical direction is determined by the orientation of the device.

It should be understood that when a component or layer is referred to as being "connected to" another component or layer, it can be directly connected to this other component or layer, or intervening components or layers may be present. In contrast, when a component is referred to as being "directly connected to" another component or layer, there are no intervening components or layers present.

The electrical connection or coupling described in this disclosure may refer to direct connection or indirect connection. In the case of direct connection, the endpoints of the components on the two circuits are directly connected or connected to each other by a conductor line segment, while in the case of indirect connection, there are switches, diodes, capacitors, inductors, resistors, other suitable components, or a combination of the above components between the endpoints of the components on the two circuits, but the intermediate component is not limited thereto.

The words "first", "second", "third", "fourth", "fifth", and "sixth" are used to describe components. They are not used to indicate the priority order of or advance relationship, but only to distinguish components with the same name.

It should be noted that the technical features in different embodiments described in the following can be replaced, recombined, or mixed with one another to constitute another embodiment without depart in from the spirit of the present invention.

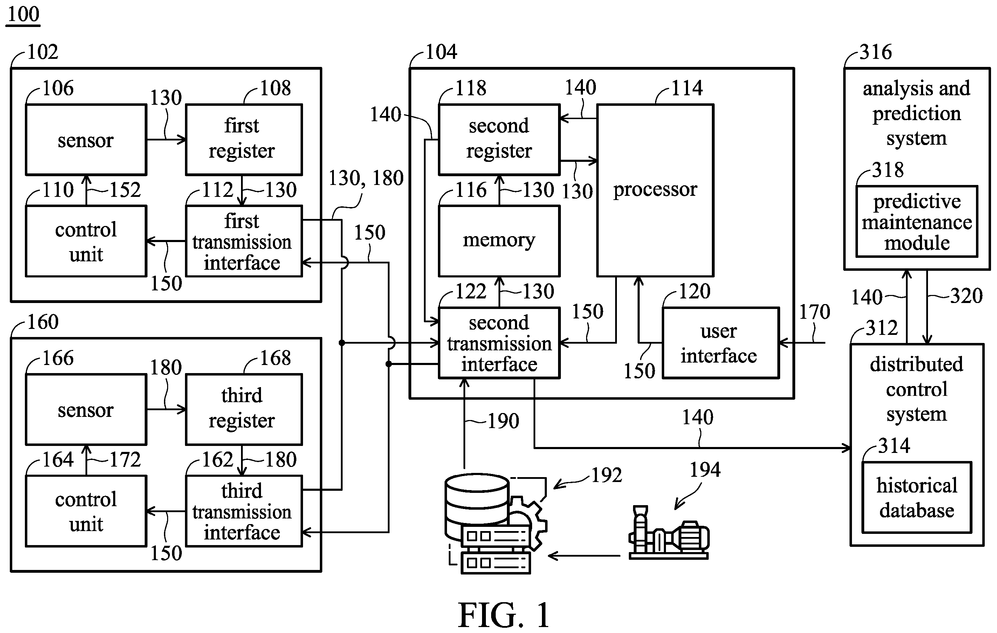

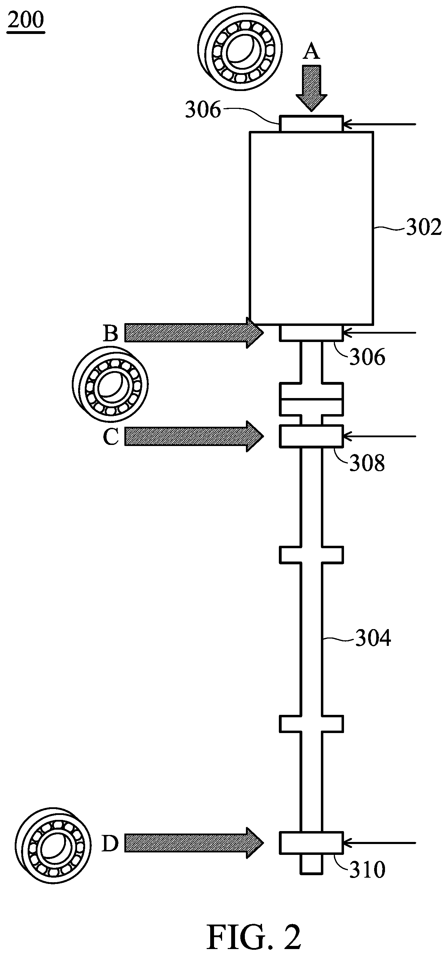

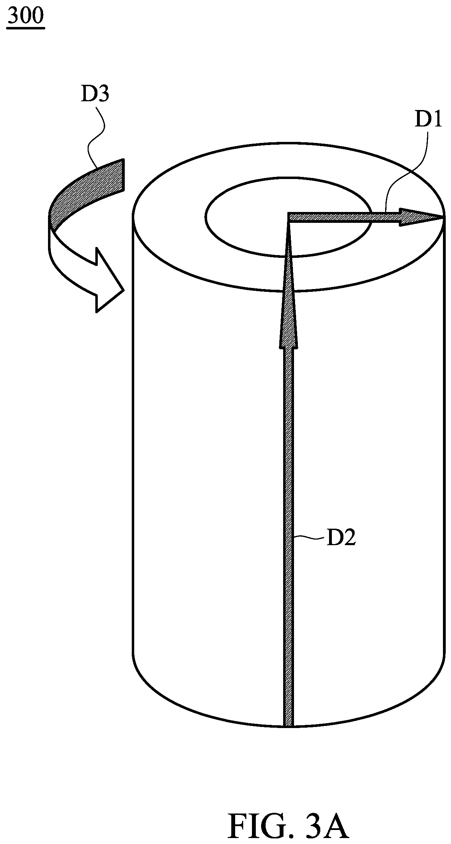

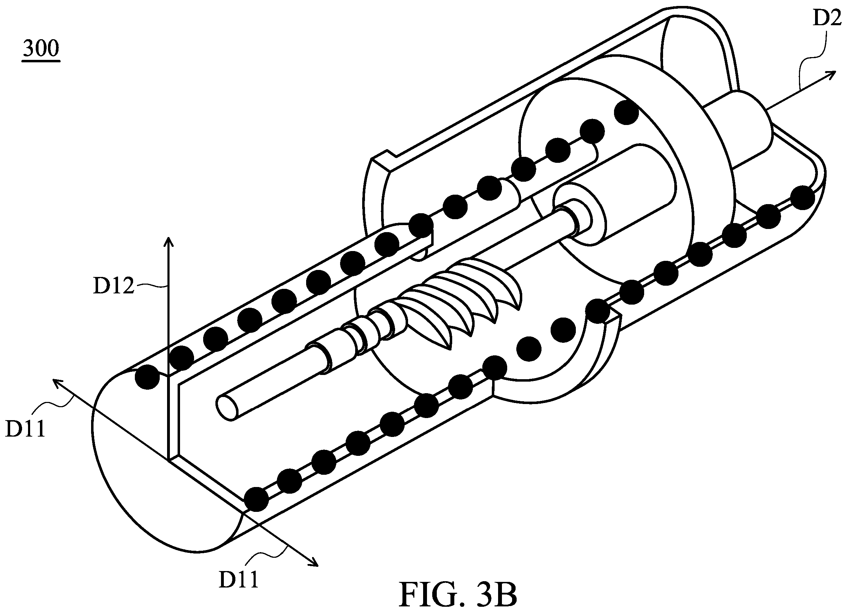

FIG. 1 shows a schematic diagram of an electronic system 100 in accordance with some embodiments of the present invention. As shown in FIG. 1, the electronic system 100 includes a first vibration sensing device 102, a second vibration sensing device 160, a control device 104, a database 192, a distributed control system 312, and an analysis and prediction system 316. In some embodiments, the first vibration sensing device 102 is disposed on the surface of a first equipment (for example, first equipment 200 in FIG. 2) to detect a first time-domain vibration signal 130 when the first equipment is operating. The second vibration sensing device 160 is disposed on the surface of a second equipment (for example, second equipment 300 in FIG. 3A and FIG. 3B) to detect a second time-domain vibration signal 180 when the second equipment is operating, wherein the second equipment is associated with the first equipment during a production process. For example, in some embodiments of the petrochemical industry, the first equipment is a high-pressure reactor, and the second equipment is a compressor. The second equipment is used to create a high-pressure environment inside the first equipment to facilitate various chemical reactions.

The database 192 is used to store process parameters 190 associated with at least one of the first equipment and the second equipment. The database 192 then sends the process parameters 190 to the control device 104. In some embodiments, the process parameters 190 are selected from one or more of a temperature, a pressure, and a flow rate. For example, when manufacturing ethylene vinyl acetate (EVA) in the chemical industry, the process parameters 190 are selected from one or more of an ethylene flow rate, a vinyl acetate flow rate, a plasticizer flow rate, and a catalyst flow rate. In some embodiments illustrated in FIG. 1, the database 192 stores process parameters in accordance with a pump 194. Specifically, the process parameters include a pump flow setting. The pump flow setting corresponds to the raw material flow rate for different products in the production process.

The control device 104 includes a processor 114. The processor 114 receives the first time-domain vibration signal 130, the second time-domain vibration signal 180, and the process parameters 190. The processor 114 performs data fusion on the first time-domain vibration signal 130, the second time-domain vibration signal 180, and the process parameters 190 to generate feature data 140. The feature data 140 is used to train a predictive model (such as in a predictive maintenance module 318 in the analysis and prediction system 316). The predictive model is configured to diagnose the health status of the first equipment. For example, the predictive model can be used to assess the likelihood that the first equipment will experience abnormalities in the future, but the present invention is not limited thereto.

In detail, the first vibration sensing device 102 includes a sensor 106, a first register 108, a control unit 110, and a first transmission interface 112. In some embodiments, the first transmission interface 112 receives a control instruction 150 from the processor 114 of the control device 104. In some embodiments, the control instruction 150 includes but are not limited to a sampling rate, a start condition, an end condition, and a transmission target address of the time-domain vibration signal 130. The control unit 110 outputs an enable signal 152 according to the control instruction 150. The sensor 106 receives the enable signal 152 and start detecting the first time-domain vibration signal 130 when the first equipment is operating. The first register 108 stores the first time-domain vibration signal 130, and sends the first time-domain vibration signal 130 to the first transmission interface 112, thereby outputting the first time-domain vibration signal 130 to the control device 104.

In some embodiments, the sensor 106 is a vibration-related sensor, such as a speed sensor, an accelerometer, or a displacement sensor, but the present invention is not limited thereto. In some embodiments, the sensor 106 has a sampling rate of 6400 sampling points per second, but the present invention is not limited thereto. In some embodiments, the first vibration sensing device 102 detects the actual vibration of an object rather than the vibration of air. In other words, the first vibration sensing device 102 is used to detect the actual shaking amount of the first equipment (for example, the first equipment 200) instead of detecting sound waves in the air. In some embodiments, the first register 108 is a volatile memory, but the present invention is not limited thereto. In some embodiments, the control unit 110 may be, for example, a central processing unit, a microprocessor, or a microcontroller, but the present invention is not limited thereto. In some embodiments, the first transmission interface 112 is a Universal Serial Bus (USB), but the present invention is not limited thereto.

The second vibration sensing device 160 includes a sensor 166, a third register 168, a control unit 164, and a third transmission interface 162. In some embodiments, the third transmission interface 162 receives a control instruction 150 from the processor 114 of the control device 104. In some embodiments, the control instruction 150 includes but are not limited to a sampling rate, a start condition, an end condition, and a transmission target address of the time-domain vibration signal 130. The control unit 164 outputs an enable signal 172 according to the control instruction 150. The sensor 166 receives the enable signal 172 and start detecting the second time-domain vibration signal 180 when the second equipment is operating. The third register 168 stores the second time-domain vibration signal 180, and sends the second time-domain vibration signal 180 to the third transmission interface 162, so that the second time-domain vibration signal 180 is output to the control device 104.

In some embodiments, the sensor 166 is a vibration-related sensor, such as a speed gauge, an accelerometer or a displacement meter, but the present invention is not limited thereto. In some embodiments, the sensor 166 has a sampling rate of 6400 sampling points per second, but the present invention is not limited thereto. In some embodiments, the second vibration sensing device 160 detects the actual vibration of an object rather than the vibration of air.. In other words, the second vibration sensing device 160 is used to detect the actual shaking amount of the second equipment (for example, the second equipment 300) instead of detecting sound waves in the air. In some embodiments, the third register 168 is a volatile memory, but the present invention is not limited thereto. In some embodiments, the control unit 164 may be, for example, a central processing unit, a microprocessor, or a microcontroller, but the present invention is not limited thereto. In some embodiments, the third transmission interface 162 is a Universal Serial Bus (USB), but the present invention is not limited thereto.

In some embodiments of FIG. 1, the processor 114 of the control device 104 receives the first time-domain vibration signal, the second time-domain vibration signal 180, and the process parameters 190. The processor 114 performs data fusion on the first time-domain vibration signal 130, the second time-domain vibration signal 180, and the process parameters 190 to generate feature data 140. In detail, the control device 104 further includes a memory 116, a second register 118, a user interface 120, and a second transmission interface 122. The second transmission interface 122 receives the first time-domain vibration signal 130 from the first vibration sensing device 102, the second time-domain vibration signal 180 from the second vibration sensing device 160, and the process parameters 190 from the database 192. The memory 116 stores the first time-domain vibration signal 130, the second time-domain vibration signal 180, and the process parameters 190 received from the second transmission interface 122, and outputs the first time-domain vibration signal 130, the second time-domain vibration signal 180, and the process parameters 190. The second register 118 stores the first time-domain vibration signal 130, the second time-domain vibration signal 180, and the process parameters 190 obtained from the memory 116.

In some embodiments illustrated in FIG. 1, the processor 114 reads the first time-domain vibration signal 130, the second time-domain vibration signal 180, and the process parameters 190 from the second register 118. In other words, in some embodiments illustrated in FIG. 1, the control device 104 may first store the first time-domain vibration signal 130, the second time-domain vibration signal 180, and the process parameters 190 into the second register 118. When receiving user instructions in online mode or offline mode, the control device 104 then performs data fusion on the first time-domain vibration signal 130, the second time-domain vibration signal 180, and the process parameters 190 to generate feature data 140. In this way, the computing resources of the control device 104 are conserved by deferring the data fusion until user instructions are received, and offline mode operation is supported. Consequently, the present invention can be applied to work sites that lack network connectivity.

In some embodiments, the second transmission interface 122 may be the USB, but the present invention is not limited thereto. In some embodiments, the user interface 120 generates the control instruction 150 in response to a user's operation 170. In some embodiments, the user interface 120 may comprise, for example, a display, a keyboard, a mouse, etc., but the present invention is not limited thereto. In some embodiments, the processor 114 receives the control instruction 150, and sends the control instruction 150 to the first vibration sensing device 102 and the second vibration sensing device 160 through the second transmission interface 122. The first vibration sensing device 102 receives the control instruction 150 through its first transmission interface 112. The second vibration sensing device 160 receives the control instruction 150 through its third transmission interface 162.

Then, the distributed control system 312 receives the feature data 140 from the control device 104. In some embodiments, the distributed control system 312 includes a historical database 314. The historical database 314 stores feature data 140 from the processor 114 to generate historical feature data. The processor of the analysis and prediction system 316 trains the predictive model (for example, the predictive maintenance module 318) based on the first time-domain vibration signal 130, the second time-domain vibration signal 180, and the historical feature data to output a prediction result 320 regarding the health status of the first equipment through the predictive model. In some embodiments, the processor 114 can display the prediction result 320 generated by the predictive maintenance module 318 on the user interface 120.

In detail, the processor 114 performs feature extraction on the first time-domain vibration signal 130 and the second time-domain vibration signal 180. In some embodiments, the processor 114 performs spectral analysis on the first time-domain vibration signal 130 and the second time-domain vibration signal 180. In some embodiments, the processor 114 performs data source time-series analysis on the first time-domain vibration signal 130, the second time-domain vibration signal 180, and the process parameters 190. The data source time-series analysis includes determining a time difference between a time point when the first time-domain vibration signal is received and a time point at which a fault is predicted to occur based on the first time-domain vibration signal 130, the second time-domain vibration signal 180, and the process parameters 190.

In some embodiments, the processor 114 performs vibration signal analysis on the first time-domain vibration signal 130 and the second time-domain vibration signal 180. The vibration signal analysis includes analyzing the first time-domain vibration signal 130 according to a structural vibration transmission characteristic of the first equipment (for example, the first equipment 200) and analyzing the second time-domain vibration signal 180 according to a structural vibration transmission characteristic of the second equipment (for example, the second equipment 300) to generate a vibration transmission characteristic analysis result. The processor 114 determines a mathematical correlation among the first time-domain vibration signal 130, the second-time domain vibration signal 180, the process parameters 190, the historical feature data, the time difference, and the vibration transmission characteristic analysis result, thereby completing training of the predictive maintenance module 318.

For example, it is assumed that the vibration signals of the first equipment 200 and the second equipment 300 (for example, the first time-domain vibration signal 130 and the second time-domain vibration signal 180) are represented by functions S₁(t) and function S₂(t) respectively. The sampling rates Fs of the two vibration signals are both 6400, that is, each vibration signal has 6400 sampling points. The feature extraction process is expressed as a mapping function F, which maps the two vibration signals into feature vectors having 14 features each, for example, the vector X₁ = F(S₁(t)) = [x_{1,1},x_{1,2},...,x_{1,14}], and X₂ = F(S₂(t)) = [x_{2,1},x_{2,2},...,x_{2,14}]. The methods for feature extraction may be, for example, root mean square (RMS), maximum value (Max), minimum value (Min), absolute average, absolute maximum, standard deviation (std), peak-to-peak, kurtosis, skewness, crest factor, clearance factor, shape factor, and impulse factor, but the present invention is not limited thereto. The process parameters 190 can be, for example, one or more of pressure P₁, flow rate F₁, and temperature T₁. The above mentioned physical quantities and signal features are combined to form a feature vector V1 = [x_{1,1},x_{1,2},...,x_{1,14},x_{2,1}, x_{2,2},...,x_{2,14},P1,F1,T1], which constitutes the feature data 140.

In some embodiments, the processor 114 may build a predictive model based on the time domain features extracted from the first time-domain vibration signal 130 and the second time-domain vibration signal 180. The processor 114 extracts time domain features from the first time-domain vibration signal 130 and the second time-domain vibration signal 180. For example, the method for extraction of time domain features can be, for example, root mean square (RMS), maximum value (Max), minimum value (Min), absolute average, absolute maximum (absolute max), standard deviation (STD), peak-to-peak, kurtosis, skewness, crest factor, clearance factor, shape factor, impulse factor, but the present invention is not limited thereto. In some embodiments, the processor 114 uses the eXtreme Gradient Boosting Regression (XGBoost Regression) method for modeling, but the present invention is not limited thereto.

In some embodiments, the processor 114 may build a predictive model based on frequency domain features of the first time-domain vibration signal 130 and the second time-domain vibration signal 180. The processor 114 extracts key features (i.e., frequency domain features) from the first time-domain vibration signal 130 and the second time-domain vibration signal 180. For example, the method for extraction of frequency domain features can be Short-time Fourier Transform (STFT), Wavelet Packet Transform (WPT), or Fast Fourier Transform (FFT), but the present invention is not limited thereto. In some embodiments, the processor 114 employs a convolutional neural network LeNet-5 for modeling, but the present invention is not limited thereto.

In some embodiments, the database 192 illustrated in FIG. 1 is optional. In other words, the processor 114 can directly receive the first time-domain vibration signal 130 and the second time-domain vibration signal 180 and train a predictive model based on the first time-domain vibration signal 130 and the second time-domain vibration signal 180.

FIG. 2 shows a schematic diagram of a first vibration sensing device 102 being disposed on the surface of first equipment 200 in accordance with some embodiments of the present invention. In some embodiments, the first equipment 200 may be, for example, a high-pressure reactor, but the present invention is not limited thereto. The interior of the first equipment 200 is a high-pressure environment to facilitate various chemical reactions. In detail, the first equipment 200 includes a motor 302 and a motor shaft 304. When the first equipment 200 is in operation, the motor 302 may start to rotate, thereby driving the motor shaft 304 to rotate simultaneously. In some embodiments, the first vibration sensing device 102 illustrated in FIG. 1 may be disposed on various bearing of the first equipment 200, such as on a motor bearing 306 (position A and position B), on a middle bearing (position C), and on a bottom bearing (position D), but the present invention is not limited thereto. In some embodiments illustrated in FIG. 2, the motor bearing 306 at position A is located on the top of the motor 302, enabling the first vibration sensing device 102 to effectively detect the vibration signal generated when the motor 302 rotates. The motor bearing 306 at position B is located at a junction where the motor 302 is physically connected to the motor shaft 304, enabling the first vibration sensing device 102 to effectively detect the vibration signal generated when the motor 302 and the motor shaft 304 rotate. The middle bearing 308 at position C is located in the middle of the motor shaft 304, enabling the first vibration sensing device 102 to effectively detect the vibration signal generated when the motor shaft 304 rotates. Similarly, the bottom bearing 310 at position D is located at the bottom of the motor shaft 304, enabling the first vibration sensing device 102 to effectively detect the vibration signal generated when the motor shaft 304 rotates.

FIG. 3A shows a schematic diagram of the second equipment 300 in accordance with some embodiments of the present invention. In some embodiments, the second equipment 300 may be, for example, a columnar compressor, which is used to create a high-pressure environment inside the first device 200 to facilitate various chemical reactions. FIG. 3A discloses three directions based on the second equipment 300, namely, a direction D1, a direction D2, and a direction D3. The direction D1 is the radial direction of the columnar structure of the second equipment 300. The direction D2 is the axial direction of the columnar structure of the second equipment 300. The direction D3 is the circumferential direction of the columnar structure of the second equipment 300. FIG. 3B shows a schematic diagram of a second vibration sensing device 160 being disposed on the surface of the second equipment 300 in accordance with some embodiments of the present invention. As shown in FIG. 3B, the second vibration sensing device 160 is preferably disposed on the surface of the columnar structure of the second equipment 300 in the horizontal radial direction (i.e., in both the direction D1 and its opposite, the direction -D1), such as at the locations indicated by the plurality of black spots in FIG. 3B, but the present invention is not limited thereto.

Taking the chemical industry as an example, a single production line uses a control system to control various process parameters to adjust product output. In the chemical industry, the process parameters, as contemplated by the present invention, are mostly temperature, pressure, and flow rate, which will affect the quality of various products. Taking the manufacturing of ethylene vinyl acetate (EVA) as an example, the process parameters include, but are not limited to, the types, flow rates, and combinations of ethylene, vinyl acetate, plasticizers, and catalysts. After ethylene and vinyl acetate are compressed, they enter a high-pressure reactor (for example, the first equipment 200) together with peroxide to initiate a free radical polymerization reaction. Different combinations of ethylene, vinyl acetate, plasticizers, and catalysts may generate different products.; therefore, in some embodiments, the process parameters refer to how ethylene, vinyl acetate, plasticizers, and catalysts are combined. In some embodiments, the process parameters refer to the control of the plasticizer flow rate in the control system.

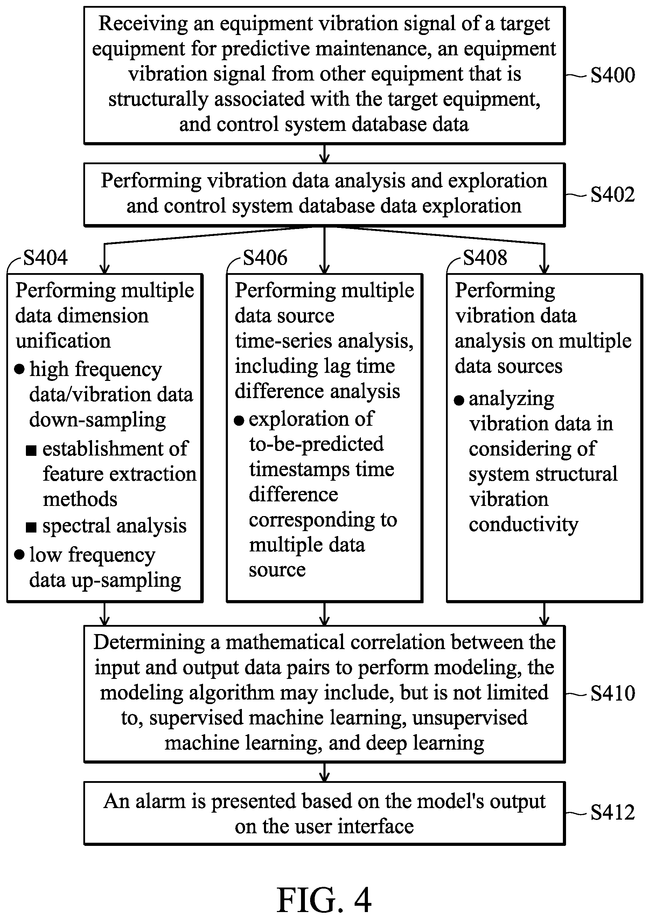

FIG. 4 shows a flow chart of a data fusion-based predictive maintenance method in accordance with some embodiments of the present invention. As shown in FIG. 4, the predictive maintenance method based on data fusion of the present invention includes the following steps. An equipment vibration signal of a target equipment for predictive maintenance (for example, the first time-domain vibration signal 130), an equipment vibration signal from other equipment that is structurally associated with the target equipment (for example, the second time-domain vibration signal 180), and control system database data (for example, the process parameter 190) are received (step S400). Vibration data analysis and exploration, and control system database data exploration are performed (step S402, which can be divided into steps S404, S406 and S408). Multiple data dimension unification is performed (step S404). Multiple data source time-series analysis, including lag time difference analysis, is performed (step S406), that is, to determine the time difference between the time point A (when the vibration signal is received) and the time point B (when a failure is predicted). Vibration data analysis on multiple data sources is performed (step S408). A mathematical correlation between the input and output data pairs is determined to perform modeling, wherein the modeling algorithm may include, but is not limited to, supervised machine learning, unsupervised machine learning, and deep learning (step S410). An alarm is presented based on the model's output on the user interface (step S412). The data fusion mentioned above can be selected from one or a combination of steps S402, S404, S406 and S408.

In some embodiments, the multiple data dimension unification may include down-sampling of high frequency data/vibration data and up-sampling of low frequency data. The down-sampling of high frequency data/vibration data may include establishing feature extraction methods and performing spectral analysis. In some embodiments, the multiple data source time-series analysis - specifically, the lag time difference analysis - may include mining for the time difference corresponding to the to-be-predicted timestamp across the data sources. In some embodiments, the vibration data analysis on multiple data sources may include analyzing vibration data in considering of system structural vibration transmission characteristics.

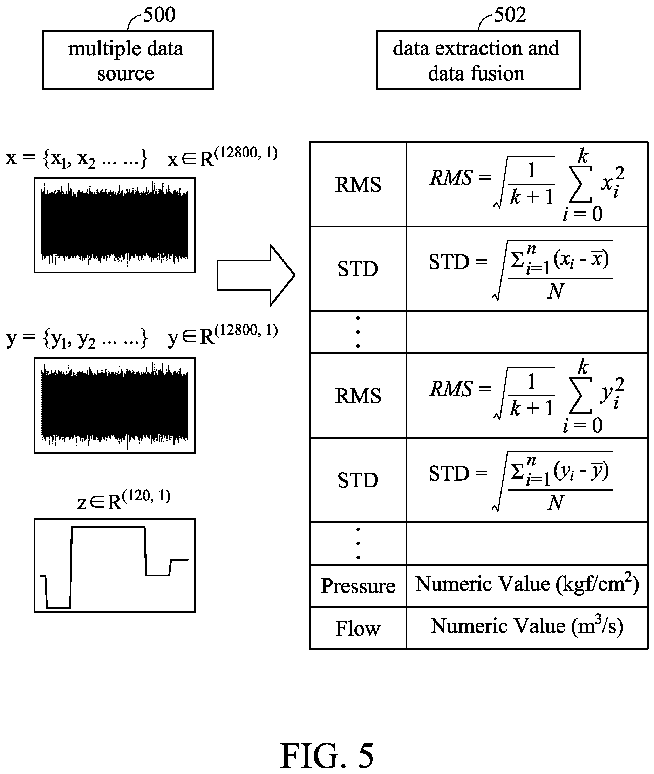

FIG. 5 shows a schematic diagram of a method of data fusion illustrated in FIG. 4 in accordance with some embodiments of the present invention. As shown in FIG. 5, multiple data source 500 may include a signal x (for example, the first time-domain vibration signal 130), a signal y (for example, the second time-domain vibration signal 180), a parameter z (for example, the process parameters). In some embodiments illustrated in FIG. 5, the signal x is sampled to 12800 sampling points (i.e., x ∈ R^{(12800,1)}), the signal y is sampled to 12800 sampling points (i.e., y ∈ R^{(12800,1)}), and the parameter z is sampled to 120 sampling points (i.e., z ∈ R^{(120,1)}). In some embodiments, the method of data extraction and data fusion 502 is implemented by having the processor 114 perform a root mean square (RMS) calculation and a standard deviation (STD) calculation on the signal x, the signal y, and parameter z (e.g., pressure or flow rate). In some embodiments, the method of the data extraction and data fusion 502 is to perform one or more steps of data standardization, data combination, data arrangement, data mixing, data layering, and data extraction on multiple signals from the multiple data sources 500.

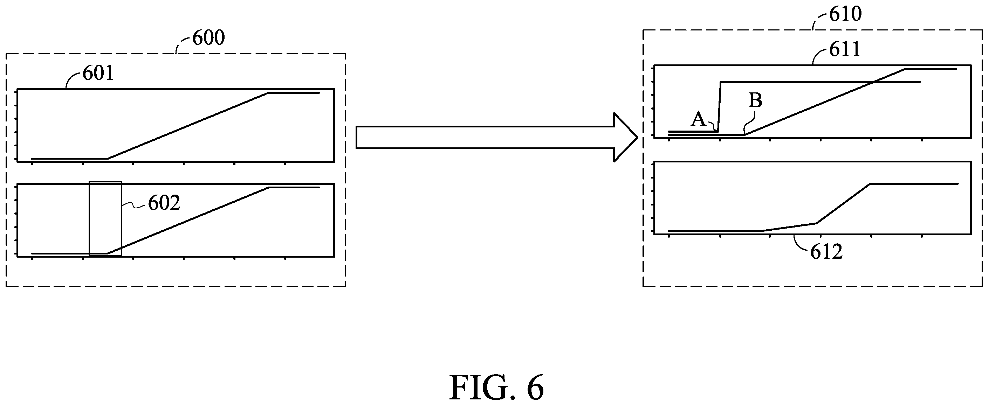

FIG. 6 shows a comparison diagram of vibration signals between a predictive alarm system 600 established using only a vibration data source and a predictive alarm system 606 established using multiple data sources in accordance with some embodiments of the present invention. As shown in FIG. 6, if the vibration signal detected by the vibration sensing device for the first equipment 200 (as shown in a waveform diagram 601) is directly used as a sole input of the predictive model, the anticipated onset of deterioration will be determined too early (e.g., as indicated by block 602), causing the alarm system to start alarming prematurely. In addition to the vibration signal of the first equipment 200 (for example, as shown in data B of a waveform diagram 611), the predictive model of the present invention also considers the vibration signal of the second equipment 300 (for example, as shown in data A of the waveform diagram 611), and preferably also considers the process parameters. After data fusion (as shown in waveform diagram 612), the predicted onset of deterioration produced by the predictive model is more accurate, which also allows the alarm system to issue an alarm at a more accurate time point. In some embodiments, the data A of the waveform diagram 611 can be used as a process parameter (such as the flow rate over time). The predictive model that simultaneously incorporates the vibration data B from the first equipment 200 and the process parameter data A generates a predicted onset time of deterioration, which is more accurate than that produced by a predictive model that only considers a sole vibration data. In other words, incorporating considerations of related equipment (e.g., preceding process equipment) and/or process parameters (such as flow rate) simultaneously has a positive impact on the health status diagnosis of the target equipment. In some embodiments, the predictive alarm system 606 established using multiple data sources is the electronic system 100 illustrated in FIG. 1.

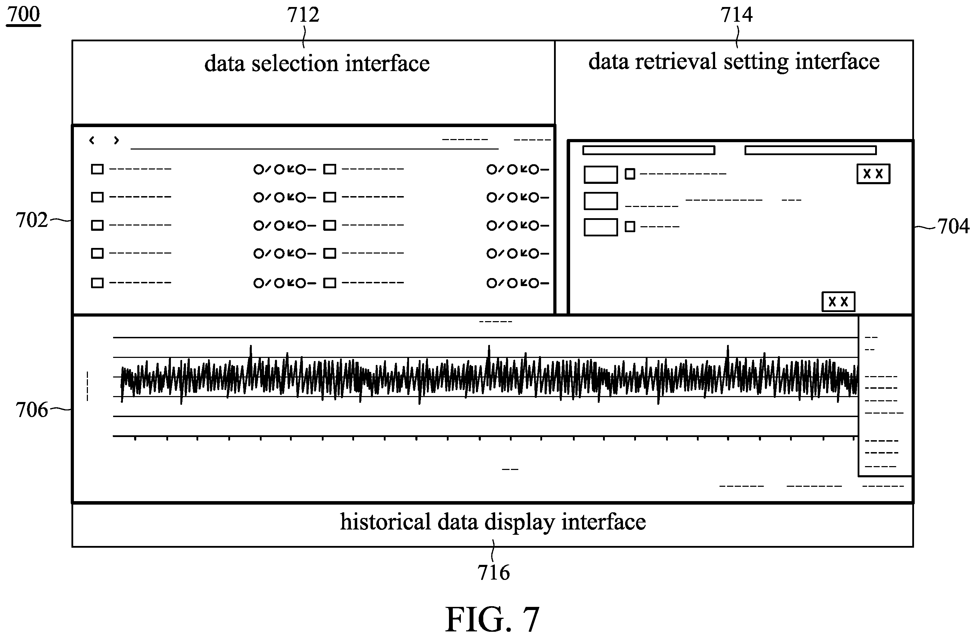

FIG. 7 shows a schematic diagram of a user interface 700 in accordance with some embodiments of the present invention. As shown in FIG. 7, the user interface 700 includes a first area 702, a second area 704, and a third area 706. In some embodiments, the first area 702 serves as a data selection interface, which performs the functions of function block 712, including selecting/querying relevant data for historical data presentation or export. The first area 702 can also select data used to train the predictive model, such as the vibration signal of the first equipment 200 (such as a high-pressure reactor), and the vibration signals of the second equipment 300 (such as the process equipment before the high-pressure reactor, that is, the secondary compressor), and process parameters (such as the setting parameters of the pump for raw material flow rates of different product during the production process). The second area 704 is a data retrieval setting interface, which performs the functions of the function block 714, including to configure a time period/sampling interval/sampling method for the data selected in the first area 702 for training the predictive model, or to fill in missing values for data export. The third area 706 is a historical data display interface, which performs the functions of the function block 716, including generating predictive maintenance data (for example, information on the anticipated onset of deterioration), viewing historical data status, and downloading the predictive maintenance data as a graph file or as a data file for use. In some embodiments, alarm settings (such as reminder conditions, trigger conditions, notification objects, alarm types, etc.) can also be set in the first area 702. In the third area 706, an alarm is issued based on the output of the predictive model according to the set alarm conditions.

When the present invention performs predictive maintenance on the first equipment 200 (such as a high-pressure reactor), in the step of training the predictive model, considering not only the vibration signal of the first equipment 200 itself but also the vibration signal of the second device 300 (such as the preceding process equipment of the high-pressure reactor, that is, the secondary compressor) associated with the first device 200 in the production process. Preferably, in the step of training the predictive model, in addition to considering the vibration signals of the first equipment 200 and the second equipment 300, the process parameters (such as the setting parameters of the pump for raw material flow rates for different product during the production process) can also be considered. The resulting predictive maintenance outcome for the first equipment 200 (for example, an estimated time at which a bearing in a high-pressure reactor may fail) is more accurate than that obtained by only considering the vibration signal of the first equipment 200.

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. An electronic system (100), comprising:
a first vibration sensing device (102), disposed on a surface of a first equipment (200), configured to detect a first time-domain vibration signal (130) when the first equipment is operating;
a second vibration sensing device (160), disposed on a surface of a second equipment (300), configured to detect a second time-domain vibration signal (180) when the second equipment is operating; wherein the second equipment is associated with the first equipment during a production process;
a database (192), configured to store process parameters associated with at least one of the first equipment and the second equipment; and
a processor (114), configured to receive the first time-domain vibration signal, the second time-domain vibration signal, and the process parameters, and to train a predictive model based on the first time-domain vibration signal, the second time-domain vibration signal, and the process parameters,
wherein the predictive model is configured to diagnose a health status of the first equipment.

2. The electronic system as claimed in claim 1, further comprising:
a historical database (314), configured to store historical feature data;
wherein the processor (114) trains the predictive model based on the first time-domain vibration signal, the second time-domain vibration signal, the process parameters, and the historical feature data, and outputs a prediction result (320) for the health status of the first equipment through the predictive model.

3. The electronic system as claimed in claim 2, wherein the processor (114) performs feature extraction on the first time-domain vibration signal (130) and the second time-domain vibration signal (180).

4. The electronic system as claimed in claim 3, wherein the processor (114) performs spectrum analysis on the first time-domain vibration signal (130) and the second time-domain vibration signal (180).

5. The electronic system as claimed in claim 1, wherein the processor (114) performs data fusion on the first time-domain vibration signal (130), the second time-domain vibration signal (180), and the process parameters.

6. The electronic system as claimed in claim 5, wherein the processor (114) performs a data source time-series analysis on the first time-domain vibration signal, the second time-domain vibration signal, and the process parameters.

7. The electronic system as claimed in claim 6, wherein the data source time-series analysis comprises determining a time difference between a time point when the first time-domain vibration signal (130) is received and a time point at which a fault is predicted to occur based on the first time-domain vibration signal, the second time-domain vibration signal (180), and the process parameters.

8. The electronic system as claimed in claim 7, wherein the processor (114) performs vibration signal analysis on the first time-domain vibration signal (130) and the second time-domain vibration signal (180).

9. The electronic system as claimed in claim 8, wherein the vibration signal analysis comprises analyzing the first time-domain vibration signal (130) according to a structural vibration transmission characteristic of the first equipment (200) and analyzing the second time-domain vibration signal (180) according to a structural vibration transmission characteristic of the second equipment (300) to generate a vibration transmission characteristic analysis result.

10. The electronic system as claimed in claim 9, wherein the processor (114) determines a mathematical correlation among the first time-domain vibration signal (130), the second-time domain vibration signal (180), the process parameters, the historical feature data, the time difference, and the vibration transmission characteristic analysis result to complete training of the predictive model.

11. The electronic system as claimed in claim 2, further comprising: a user interface (700), wherein the user interface comprises:
a data selection interface (702) for selecting the historical feature data;
a data retrieval setting interface (704) for setting a sampling interval; and
a historical data display interface (706), on which the processor (114) displays historical data content based on the selected historical feature data and the set sampling interval.

12. The electronic system as claimed in claim 1, wherein the process parameters are selected from one or more of a temperature, a pressure, and a flow rate.

13. The electronic system as claimed in claim 1, wherein the process parameters are selected from one or more of an ethylene flow rate, a vinyl acetate flow rate, a plasticizer flow rate, and a catalyst flow rate.

14. The electronic system as claimed in claim 1, wherein the process parameters comprise a pump flow setting; wherein the pump flow setting corresponds to a raw material flow rate of different products in the production process.

15. The electronic system as claimed in claim 1, wherein the first equipment (200) is a high-pressure reactor, and the second equipment (300) is a compressor; the first vibration sensing device (102) is disposed at a bearing connection of the high-pressure reactor; the second vibration sensing device (160) is disposed on a horizontal radial surface of the compressor.
